# EUROPEAN PATENT SPECIFICATION

(11) **EP 2 237 615 B1**
(45) Date of publication and mention of the grant of the patent: **25.09.2013**
(21) Application number: 08861461.5
(22) Date of filing: 10.12.2008
(51) Int. Cl.: H04W 40/24, H04L 12/24

(54) **MICROWAVE LINK SEARCHING METHOD AND DEVICE**
VERFAHREN UND VORRICHTUNG ZUR SUCHE NACH MIKROWELLENVERKNÜPFUNGEN
PROCÉDÉ ET DISPOSITIF DE RECHERCHE DE FAISCEAUX HERTZIENS

(30) Priority: 10.12.2007 CN 200710195341
(43) Date of publication of application: 06.10.2010
(73) Proprietor: Huawei Technologies Co., Ltd., Longgang District, Shenzhen Guangdong 518129 (CN)
(72) Inventor: DUAN, Lan, Longgang District 518129, Shenzhen (CN); GAO, Huiping, Longgang District 518129, Shenzhen (CN)
(74) Representative: Kreuz, Georg Maria
(86) International application number: PCT/CN2008/073437
(87) International publication number: WO 2009/076899

(56) References cited:
- WO-A1-01/55854
- CN-A- 1 689 273
- CN-A- 1 783 800
- CN-A- 1 983 953
- CN-A- 101 207 888
- KR-A- 20050 056 030
- US-A- 6 078 596
- US-A1- 2003 117 962

## Description

### FIELD OF THE TECHNOLOGY

The present invention relates to a microwave network technology, and more particularly to a microwave link searching method and a microwave link searching device.

### BACKGROUND OF THE INVENTION

A microwave network is formed by network elements and microwave links. The network element is a basic composition unit of an optical network. The microwave link is a physical carrier for microwave transmission, which connects separate network element devices, or referred to as microwave devices in the network together. A network management device presents connections of links in the network as a topology relation, so as to present composition relations in a microwave network in a form of topological graph to a user, and meanwhile assist to complete associated network management work.

In practical applications, the composition of the microwave network usually changes. For example, during the deployment or capacity expansion, original microwave links need to be modified. In such a manner, the topological graph in the network management device adapted to represent composition relations in the microwave network also needs to be correspondingly updated.

In the prior art, after the physical links are configured, operation and maintenance personnel cannot acquire information about the configured physical links automatically, so that the personnel can only update the network topological graph through establishing microwave links in the network management device manually according to the current practical network layout. In such a manner, many problems occur in practical operations. For example, a microwave network in the prior art is usually a base-station back-transmission network, the network structure is mostly tree networking, and a convergence point, that is, the connection among microwave devices is usually multidirectional. During the operations in the prior art, the operation and maintenance personnel needs to confirm subsequent operations to be performed on the microwave devices according to the topological graph presented by the network management device. Therefore, if an error occurs to one direction of the manually-configured link, the microwave devices in all the subsequent hops are influenced. Moreover, as the microwave transmission is greatly influenced by the space environment and has a poor diffraction capability, many relay points are required in the toll transport, thereby causing a huge network structure. Thus, if the connection relations of microwave links are manually created according to the network planning, the work load is quite heavy and the cost is rather high.

As seen from the above introductions, in the prior art, when the topological graph corresponding to the microwave network needs to be updated after the physical links are configured, the required link information fails to be acquired automatically, thereby causing great inconveniences in practical operations.

US 2003/0117962 A1 relates to an automated method of detecting, and provisioning connections between interconnected nodes in a consolidated network element involves sending messages between the nodes. The messages are inserted into data frames sent from respective transmit ports through inter-node links, to respective receive ports. The messaged contain information used to provision the receive ports at which they are received, and information for identifying equipment that generated, transmitted, and conveyed the message, respectively, so that the connectivity of the interconnected nodes can be verified.

WO 01/55854 A1 relates to a method and system for providing autonomous real time updates of a network topology. The method is based on a physical layer point-to-point protocol residing in each network element (210,220). Either responsive to a request from a network management system (230) or responsive to network trigger event a network initiates a request to its neighboring network elements. The neighboring network elements respond to the request by identifying themselves via an electronic serial number and the port by which they are connected to the requesting network element. The requesting network element then forwards the response to the request to a network management system (230). The network management system (230) then uses the responses to constructed a network topology.

### SUMMARY OF THE INVENTION

Accordingly, the present invention is directed to a microwave link searching method, a microwave device, and a network management device, which are applicable to acquire microwave link information automatically.

The technical solutions of the present invention are described as follows.

The present invention provides a microwave link searching method, which includes the following steps.

A first microwave device that needs microwave link search backs up the information of the overhead bytes of the first microwave device's ports, which need microwave link search, after receiving a search start command delivered by a network management device.

The first microwave device sets a format of overhead bytes of the first microwave device's said ports that need microwave link search as a link search format after the information of the overhead bytes of the first microwave device's said ports is backed up, and sends a microwave frame to the second microwave device, wherein the microwave frame carries the overhead bytes which carry the link information of the first microwave device, and the first microwave device and the second microwave device are network elements of a microwave network.

The first microwave device receives a microwave frame sent by the second microwave device. The microwave framesent by the second microwave device carrieslink information of the second microwave device, and the microwave frame sent by the second microwave device is sent after the format of overhead bytes of the second microwave device's ports that need microwave link search is set as a link search format after the current information of the overhead bytes of the second microwave device's said ports is backed up.

The first microwave device provides the link information of the second microwave device carried in the microwave frame to a network management device, such that the link information is analyzed and processed by the network management device to obtain link connection data.

The first microwave device recovers the information of the overhead bytes of said ports of the first microwave device to the backup information of the overhead bytes of the ports of the first microwave device after the link information of the second microwave device is provided to the network management device.

The present invention provides an another microwave link searching method, which includes the following steps.

A network management device backs up the information of the overhead bytes of all the ports of the microwave devices that need microwave link search, wherein the microwave devices are the network elements of a microwave network.

The network management device sets a current format of overhead bytes of all the ports of said microwave devices as a link search format after the information of the overhead bytes of all the ports of said microwave devices is backed up.

A first microwave device, which is one of the said microwave devices, send a microwave frame to a second microwave device which is one of said microwave devices and is connected to the first microwave device, wherein the microwave frame sent by the first microwave device carries the overhead bytes whose format is set as a link search format and which carry the link information of the first microwave device.

The first microwave device receives a microwave frame sent by the second microwave device, wherein the microwave frame sent by the second microwave device carries link information of the second microwave device and is sent after the format of overhead bytes of the second microwave device's ports that need microwave link search is set as a link search format after the information of the overhead bytes of the second microwave device's said ports is backed up.

The first microwave device provides the link information of the second microwave device to the network management device, such that the network management device analyzes and processes the link information to obtain link connection data.

The network management device recovers the information of the overhead bytes of all the ports of the microwave devices that need microwave link search to their corresponding backed up information after the microwave devices provide the link information carried in a microwave frame sent by other microwave device connected to themselves to the network management device.

The present invention provides a microwave device, which includes a receiving unit, a notifying unit, a sending unit and a providing unit.

The notifying unit is adapted to receive a search start command delivered by the network management device and notify the sending unit to perform its own functions according to the search start command.

The sending unit is adapted to set an overhead byte conforming to a link search format after receiving a notification message from the notifying unit, and send a microwave frame in which the overhead byte is carried, wherein the microwave frame carries link information of the microwave device, and is sent after the format of overhead bytes of the microwave device's ports that need microwave link search is set as a link search format after information of the overhead bytes of the microwave device's said ports is backed up.

The receiving unit is adapted to receive a microwave frame sent by a second microwave device that needs microwave link search and is connected to the microwave device. The microwave frame sent by the second microwave device carries link information of the second microwave device. The microwave frame sent by the second microwave device is sent after the format of overhead bytes of the second microwave device's ports that need microwave link search is set as a link search format after information of the overhead bytes of said ports of the second microwave device is backed up.

The providing unit is adapted to provide the link information of the second microwave device carried in the microwave frame to the network management device.

The microwave device provided by the present invention recovers the information of the overhead bytes of said ports of the microwave device to the backup information of the overhead bytes of the ports of the microwave device after the link information of the second microwave device is provided to the network management device, wherein both the microwave device and the second microwave device are network elements of a microwave network.

The present invention provides a network management device, which includes a setting unit and an obtaining unit.

The setting unit is adapted to set an overhead byte for a microwave device that needs microwave link search. The overhead byte carries link information of the microwave device that needs microwave link search.

The obtaining unit is adapted to query the microwave device that needs microwave link search to obtain link information of a microwave device carried in a received microwave frame, where the microwave device needs microwave link search and is connected to the microwave device that needs microwave link search.

The network management device provided by the present invention backs up the information of the overhead bytes of the microwave device before the setting unit sets the overhead byte for the microwave device, and delivers a command of recovering the information of the overhead bytes of the microwave device to the backup information of the overhead bytes after the obtaining unit obtains the link information of the microwave device, wherein the microwave device is a network element of a microwave network.

The present invention provides a computer readable storage medium, which includes computer program codes. The computer program codes are executed by a computer processor, so that the computer processor is triggered to perform operations according to the microwave link searching method.

As seen from the above, through the technical solutions of the present invention, a first microwave device that needs microwave link search receives a microwave frame sent by a second microwave device that needs microwave link search and is connected to the first microwave device. The microwave frame carries link information of the second microwave device. The first microwave device provides the link information of the second microwave device carried in the microwave frame to a network management device.

Compared with the prior art, in the solutions of the present invention, the microwave device that needs microwave link search obtains link information of a microwave device connected to the current microwave device via a microwave frame and provides the link information to a network management device, so as to realize the automatic search of microwave links, thereby increasing the accuracy of data required for establishing microwave links.

### BRIEF DESCRIPTION OF THE DRAWINGS

FIG. 1 is a schematic view of implementation principles according to an embodiment of the present invention;
FIG. 2 is a flow chart of a method according to a first embodiment of the present invention;
FIG. 3 is a flow chart of a method according to a second embodiment of the present invention;
FIG. 4 is a schematic view of a composition structure of a microwave device according to an embodiment of the present invention; and
FIG. 5 is a schematic view of a composition structure of a network management device according to an embodiment of the present invention.

### DETAILED DESCRIPTION OF THE EMBODIMENTS

In order to make the objectives, technical solutions, and advantages of the present invention more comprehensible, the present invention is further illustrated as follows in detail with reference to the accompanying drawings and embodiments.

In order to solve the problems in the prior art, in an embodiment, the present invention provides a solution for realizing automatic microwave link search. A first microwave device that needs microwave link search receives a microwave frame sent by a second microwave device that needs microwave link search and is connected to the first microwave device. The microwave frame carries link information of the second microwave device. The first microwave device provides the link information of the second microwave device carried in the microwave frame to a network management device.

The link information of the microwave device may be carried in an overhead byte of the microwave frame. In this embodiment of the present invention, the overhead byte refers to the overhead byte conforming to a link search format. The existing microwaves may be classified into a synchronous digital hierarchy (SDH) and a plesiochronous digital hierarchy (PDH). An encapsulation format of the SDH microwaves is uniformly specified. The encapsulation of the PDH microwaves is a private protocol, so that each microwave device manufacturer defines different microwave frames and overheads according to their respective demands. However, regardless of the encapsulation formats, as long as the overhead byte can be adopted to represent link connectivity and transfer link information of a microwave device such as information of boards, ports, or link capacity, the overhead byte can be adopted to perform the microwave link search in the embodiment of the present invention. Specifically, in the SDH microwave, a J0 byte is a regenerator section trace byte, and an x byte is a reserved byte. The two overhead bytes may both be adopted to perform microwave link search. In the PDH, any one overhead byte can be customized to perform microwave link search. Of course, any other byte that can accomplish the above functions of the overhead byte may also be used.

In this embodiment of the present invention, the overhead byte is adopted to deliver link information of a microwave device, so as to search the required link information automatically. For ease of description, the overhead byte in the PDH and SDH microwaves adopted to perform the microwave link search is referred to as an overhead byte J.

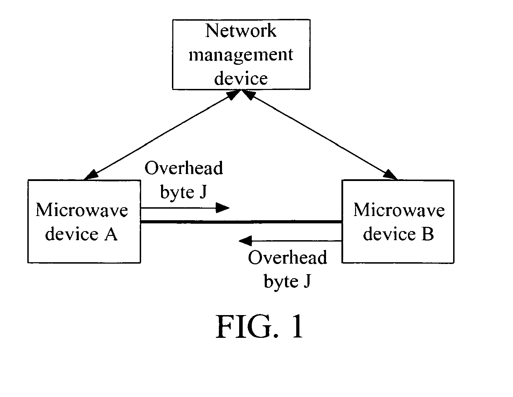

FIG. 1 shows implementation principles according to an embodiment of the present invention. A microwave device A sends its own information through an overhead byte J. After a microwave device B receives the overhead byte J, the information of the microwave device A is obtained. On the contrary, after the microwave device A receives an overhead byte J sent by the microwave device B, the information of the microwave device B is also obtained. The information that the microwave device A sends to the microwave device B is the link information of the microwave device A, such as a port number or a link capacity corresponding to a certain link in the microwave device A. On the contrary, the information that the microwave device B sends to the microwave device A is the link information of the microwave device B, such as a port number or a link capacity corresponding to the link in the microwave device B. Subsequently, the network management device obtains the link information of the microwave device received by each microwave device and analyzes and processes the link information, and correspondingly updates a network topological graph.

Based on the above introduction, the specific implementation manner of the embodiment of the present invention is described as follows. An overhead byte J is set. The overhead byte J is carried in a microwave frame and sent. The overhead byte J carries link information of a microwave device that needs microwave link search. Meanwhile, a microwave device that needs microwave link search receives a microwave frame sent by a microwave device that needs microwave link search and is connected to the current microwave device, in which the microwave frame carries the overhead byte J, so that the link information of the microwave device carried in the overhead byte J is obtained.

It should be noted that, in this embodiment of the present invention, through pre-configuration, all the microwave devices can identify a microwave frame in a microwave link search format, resolve the overhead byte J for microwave link search carried in the microwave frame, and save the resolved contents.

In practical applications, in this embodiment of the present invention, the automatic microwave link search is accomplished by the network management device together with microwave devices. The network management device may only deliver a search start command to a microwave device, obtain link information of a microwave device connected to the current microwave device that is received by the current microwave device, and analyze the obtained link information. The microwave device is adapted to perform specific searching operations, which include backing up original information of the overhead byte J, setting the overhead byte J conforming to a link search format, delivering a microwave frame, and receiving a microwave frame sent by another microwave device that needs microwave link search. Alternatively, the network management device backs up the original information of the overhead byte J, sets the overhead byte J conforming to the link search format, obtains link information, received by the current microwave device, of a microwave device that needs microwave link search and is connected to the current microwave device, and performs functions such as analysis. The current microwave device is only adapted to send and receive the microwave frame.

The two manners are illustrated in detail in the following respectively through specific embodiments.

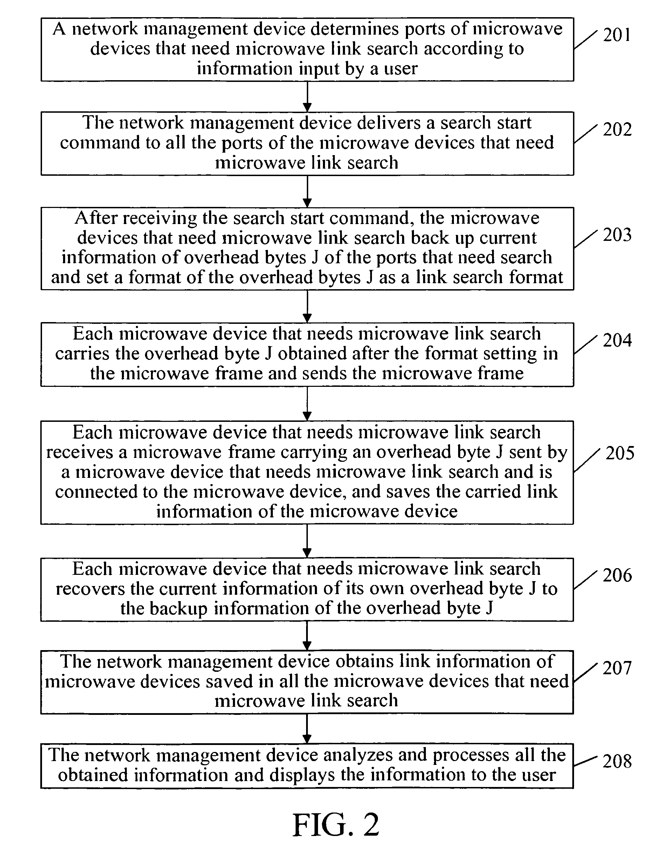

FIG. 2 is a flow chart of a method according to a first embodiment of the present invention. As shown in FIG. 2, the method includes the following steps.

In Step 201, a network management device determines ports of microwave devices that need microwave link search according to information input by a user.

The "user" mentioned in this step means an operator of the network management device. In this embodiment of the present invention, a plurality of microwave devices that needs microwave link search may exist. As one microwave device may have a plurality of ports, the network management deviceneeds to determine the ports of the microwave devices that need microwave link search in this step. It is determined according to the input of the user. For example, port information of the microwave devices that need microwave link search directly input by the user via a man-machine interface is received. Alternatively the network management device displays the information about the ports of the microwave devices in the network to the user. Then, the user clicks to select ports of the microwave devices that need microwave link search with a mouse. The network management device determines the ports of the microwave devices that need microwave link search subsequently according to the click of the user.

In Step 202, the network management device delivers a search start command to all the ports of the microwave devices that need microwave link search.

The way that the network management device delivers the command belongs to the prior art. In this step, the network management device delivers the search start command to all the ports of the microwave devices that need microwave link search through a command delivery manner in the prior art.

In Step 203, after receiving the search start command, the microwave devices that need microwave link search back up current information of overhead bytes J of the ports that need search and set a format of the overhead bytes J as a link search format.

In this step, after receiving the search start command from the network management device, each microwave device that needs link search backs up the current information of the overhead bytes J corresponding to its own ports that need microwave link search. The overhead bytes J corresponding to the ports that need microwave link search here are overhead bytes J corresponding to the microwave devices that need microwave link search mentioned above. In this embodiment, the implementation is specified to a certain port of the microwave device.

In this embodiment of the present invention, the overhead byte J may be a J0 byte or an x byte in an SDH microwave frame or may also be any overhead byte in a PDH microwave frame. As each of the bytes has its own function in the prior art, if the bytes are adopted for the microwave link search in this embodiment of the present invention, original information of the overhead bytes needs to be backed up first, such that the original functions of the overhead bytes can be recovered after the microwave link search is finished, so as to resume the previous normal work thereof.

After the backup process, each microwave device that needs microwave link search sets the format of the overhead byte J as a link search format. The link search format in this embodiment of the present invention may be specifically implemented in many forms, as long as each microwave device is enabled to identify and learn how to process the received overhead byte J in such a format through pre-configuration. However, regardless of the specific formats, the overhead byte J conforming to the link search format needs to carry the link information of the microwave device that sends the overhead byte J, for example, port information.

In Step 204, each microwave device that needs microwave link search carries the overhead byte J obtained after the format setting in the microwave frame and sends the microwave frame, in which the overhead byte J carries the link information of the microwave device that needs microwave link search.

In this step, the manner that the microwave device that needs microwave link search sends the microwave frame is the same as that in the prior art, for example, in a broadcast manner. A microwave device that needs microwave link search and is connected to the microwave device that needs microwave link search receives the microwave frame, resolves the microwave frame, and saves the link information of the microwave device that needs microwave link search carried in the microwave frame. The processing manner of microwave devices that do not need microwave link search after receiving the microwave frame is irrelevant to the present invention, and is not described here.

In Step 205, each microwave device that needs microwave link search receives a microwave frame carrying an overhead byte J sent by a microwave device that needs microwave link search and is connected to the microwave device, and saves the carried link information of the microwave device.

After receiving the search start command from the network management device, all the microwave devices that need microwave link search continuously send the microwave frame carrying the corresponding link information thereof. Thus, when each microwave device that needs microwave link search sends the microwave frame, the microwave device also receives microwave frames sent by other microwave devices that need microwave link search and are connected to the microwave device.

After the microwave device that needs microwave link search receives the microwave frame sent by the microwave device connected thereto, the microwave device that needs microwave link search resolves the microwave frame and saves the carried link information of the microwave device connected thereto.

In Step 206, each microwave device that needs microwave link search recovers the current information of its own overhead byte J to the backup information of the overhead byte J.

In this step, as the link information of the opposite-end microwave device connected to the microwave device is obtained, the functions of the overhead byte J are accomplished. Thus, the device that needs microwave link search recovers the current information of the overhead byte J, that is, the information of the overhead byte J that is set as the link search format, to the original information of the overhead byte J backed up in Step 203, such that the overhead byte J resumes performing its own functions.

In Step 207, the network management device obtains link information of microwave devices saved in all the microwave devices that need microwave link search.

In this step, each microwave device that needs microwave link search actively reports the saved link information of microwave devices to the network management device. Alternatively, the network management device queries all the microwave devices that need microwave link search and obtains all the saved link information of microwave devices.

In Step 208, the network management device analyzes and processes all the obtained information and displays the information to the user.

After obtaining the link information of microwave devices saved in all microwave devices that need microwave link search, the network management device combines, analyzes, and processes the information, and displays the processed results to the user. For example, according to the obtained information, the network management device gets to know which ports of which microwave devices are connected together, and subsequently updates a topological graph of network relations according to the information obtained through analysis, and displays to the user. The combining, analyzing, and processing operations performed by the network management device may adopt an analysis method in the prior art.

As seen from the above, in the embodiment shown in FIG. 2, the network management device and the microwave devices work together to accomplish the microwave link search operation. Specifically, the network management device is adapted to deliver a search start command and analyze the eventually obtained link information. The microwave device is adapted to set an overhead byte J conforming to a link search format, send a microwave frame, and receive a microwave frame sent by a microwave device connected thereto. In conclusion, through the technical solution in the embodiment shown in FIG. 2, the automatic microwave link search is realized.

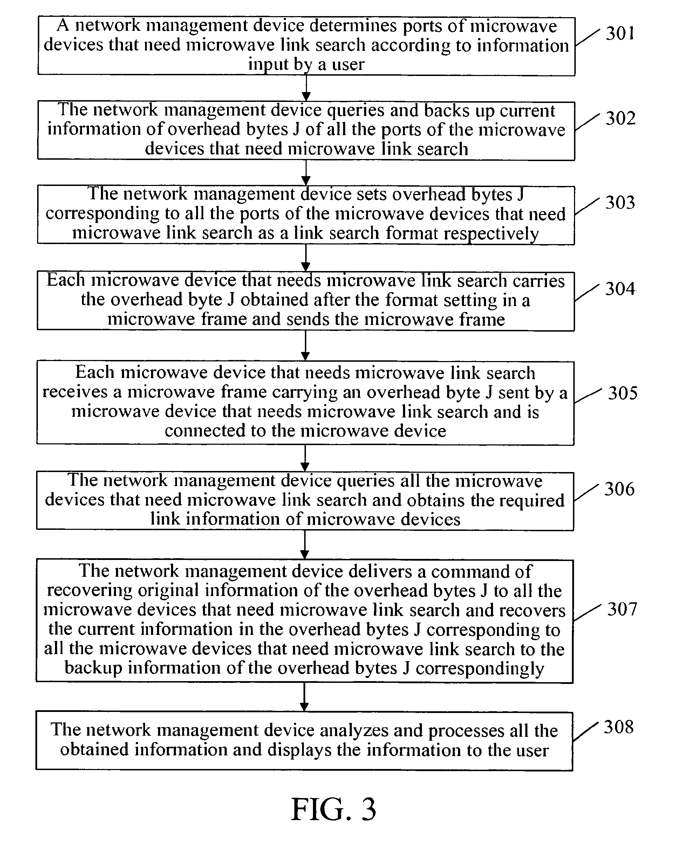

FIG. 3 is a flow chart of a method according to a second embodiment of the present invention. As shown in FIG. 3, the method includes the following steps.

In Step 301, a network management device determines ports of microwave devices that need microwave link search according to information input by a user.

In this step, the network management device receives port information of microwave devices that need microwave link search directly input by the user via a man-machine interface. Alternatively, the network management device displays the information about ports of the microwave devices in the network to the user. Then, the user clicks to select ports of microwave devices that need microwave link search with a mouse. The network management device determines the ports of the microwave devices that need microwave link search subsequently according to the click of the user.

In Step 302, the network management device queries and backs up current information of overhead bytes J of all the ports of the microwave devices that need microwave link search.

In this embodiment of the present invention, the overhead byte J may be a J0 byte or an x byte in an SDH microwave frame or may also be any overhead byte in a PDH microwave frame. As each byte has its own function in the prior art, if the bytes are adopted for the microwave link search in this embodiment of the present invention, original information of the overhead bytes needs to be backed up first, such that the original functions of the overhead bytes can be recovered after the microwave link search is finished. In this embodiment, specifically, the network management device queries information of overhead bytes J of all the ports of the microwave devices that need microwave link search and saves the queried results respectively.

In Step 303, the network management device sets overhead bytes J corresponding to all the ports of the microwave devices that need microwave link search as a link search format respectively.

In this step, the network management device performs information interaction with the microwave devices that need microwave link search, so as to set the format of the overhead bytes J corresponding to all the ports of the microwave devices that need microwave link search as a link search format. The overhead byte J corresponding to each port of each microwave device that needs microwave link search carries link information of the corresponding microwave device.

In Step 304, each microwave device that needs microwavelink search carries the overhead byte J obtained after the format setting in a microwave frame and sends the microwave frame.

In this step, the manner that the microwave device that needs microwave link search sends the microwave frame is the same as that in the prior art, for example, in a broadcast manner. After a microwave device that needs microwave link search and is connected to the microwave device that needs microwave link search receives the microwave frame, the microwave frame is resolved and link information of the microwave device that needs microwave link search carried in the microwave frame is saved.

In Step 305, each microwave device that needs microwave link search receives a microwave frame carrying an overhead byte J sent by a microwave device that needs microwave link search and is connected to the microwave device.

In Step 306, the network management device queries all the microwave devices that need microwave link search and obtains the required link information of microwave devices.

In this step, the network management device determines by itself the time to query the microwave devices. For example, the network management device starts timing after Step 303 is performed. Once the timing duration exceeds a predetermined duration, it is estimated that all the microwave devices that need microwave link search have received the link information sent by microwave devices that need microwave link search and are connected thereto, so that the network management device may query each microwave device that needs microwave link search for the link information.

In the process of querying the link information, the network management device may further determine whether the overhead byte J in the microwave frame received by each microwave device that needs microwave link search conforms to a format of port position description information. If yes, the overhead byte J is resolved and the link information carried therein is stored. The format of the port position description information introduced herein may be customized by the user.

In Step 307, the network management device delivers a command of recovering original information of the overhead bytes J to all the microwave devices that need microwave link search and recovers the current information in the overhead bytes J corresponding to all the microwave devices that need microwave link search to the backup information of the overhead bytes J correspondingly.

In this step, the command that the network management device delivers to each microwave device that needs microwave link search carries information of the overhead byte J backed up in advance corresponding to the microwave device.

In Step 308, the network management device analyzes and processes all the obtained information and displays the information to the user.

The specific processing manner is the same as that in Step208, which is not further described here.

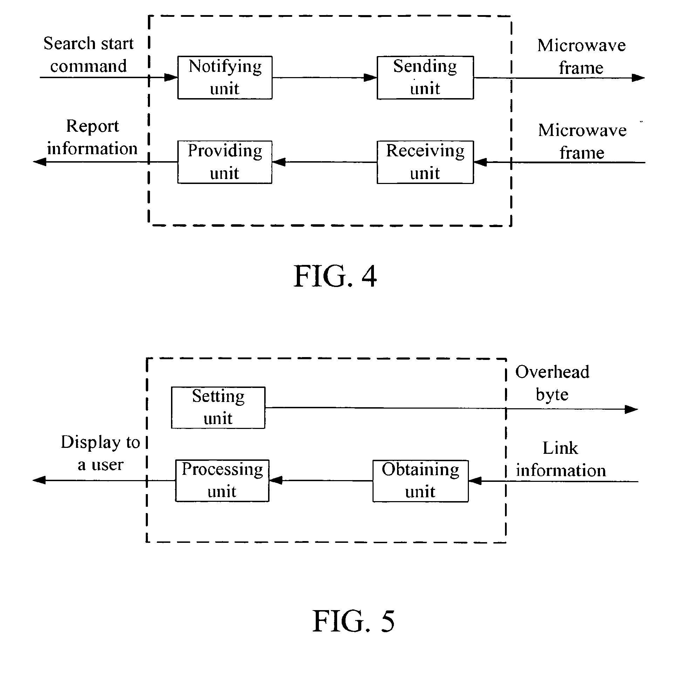

Based on the above method, FIG. 4 is a schematic view of a composition structure of a microwave device according to an embodiment of the present invention. As shown in FIG. 4, the device includes a receiving unit and a providing unit.

The receiving unit is adapted to receive a microwave frame sent by a second microwave device that needs microwave link search and is connected to the microwave device. The microwave frame carries link information of the second microwave device.

The providing unit is adapted to provide the link information of the second microwave device carried in the microwave frame to a network management device

The device further includes a notifying unit and a sending unit.

The notifying unit is adapted to receive a search start command delivered by the network management device and notify the sending unit to perform its own functions.

The sending unit is adapted to set an overhead byte conforming to a link search format after receiving a notification message from the notifying unit, carry the set overhead byte in the microwave frame, and send the microwave frame. The microwave frame carries the link information of the microwave device.

When the microwave frame is an SDH microwave frame, the overhead byte J may be a J0 byte or an x reserved byte. When the microwave frame is a PDH microwave frame, the overhead byte J may be any overhead byte.

FIG. 5 is a schematic view of a composition structure of a network management device according to an embodiment of the present invention. As shown in FIG. 5, the device includes a setting unit and an obtaining unit.

The setting unit is adapted to set an overhead byte J for a microwave device that needs microwave link search. The overhead byte J carries link information of the microwave device that needs microwave link search.

The obtaining unit is adapted to query the microwave device that needs microwave link search and obtain link information of a microwave device carried in a received microwave frame carrying the overhead byte J, where the microwave device needs microwave link search and is connected to the microwave device that needs microwave link search.

The device further includes a processing unit.

The processing unit is adapted to analyze and process the link information of the microwave device obtained by the obtaining unit and display the link information to a user.

When the microwave frame is an SDH microwave frame, the overhead byte J may be a J0 byte or an x reserved byte. When the microwave frame is a PDH microwave frame, the overhead byte J may be any overhead byte.

Specific work flows of the devices according to the embodiments shown in FIGs. 4 and 5 are obtained with reference to the illustrations of the method according to the embodiments shown in FIGs. 2 and 3, which are not further described here again.

Thus, through the technical solutions according to the embodiments of the present invention, link information of a microwave device is transferred through an overhead byte, so as to realize automatic microwave link search. Subsequently, a network management device updates the network topological graph according to the searched information. For example, the network management device gets to know which ports of which microwave devices are connected together through analyzing the searched link information, and then generates corresponding lines in the network topological graph automatically for presentation according to an analysis result. Compared with the prior art, the solutions in the embodiments of the present invention ensure the accuracy of data required for establishing microwave links, that is, avoiding possible errors in the manual operation. Moreover, the work load of the manual operation is reduced, so as to increase the efficiency and reduce the cost. In addition, through the solutions in the embodiments of the present invention, the network management device is enabled to check incorrect microwave link connections according to the obtained link information. For example, a port A of a microwave device 1 originally should be connected with a port B of a microwave device 2. However, through analyzing the obtained link information, it is found that a microwave frame sent by the port A is received by a port C of a microwave device 3, which indicates that an error occurs in the practical connection.

Through the above description of the implementation manners, it is clear to persons skilled in the art that the present invention may be accomplished through hardware, or through software together with a necessary universal hardware platform. Thus, the technical solutions of the present invention may be embodied in a form of a software product. The software product may be stored in a nonvolatile storage medium (for example, a CD-ROM, a USB flash drive, or a removable hard disk) and contain several instructions for instructing computer equipment (for example, a personal computer, a server, or network equipment) to perform the method according to each embodiment of the present invention.

## Claims

1. A microwave link searching method, **characterized by**, comprising:
backing up (203), by a first microwave device that needs microwave link search, the information of the overhead bytes of the first microwave device's ports, which need microwave link search, after receiving a search start command delivered by a network management device;
setting (203), by the first microwave device, a format of overhead bytes of the first microwave device's said ports that need microwave link search as a link search format after the information of the overhead bytes of the first microwave device's said ports is backed up, and sending a microwave frame to a second microwave device, wherein the microwave frame carries the overhead bytes which carry the link information of the first microwave device, and the first microwave device and the second microwave device are network elements of a microwave network;
receiving (205), by the first microwave device, a microwave frame sent by the second microwave device, wherein the microwave frame sent by the second microwave device carries link information of the second microwave device, and is sent after the format of overhead bytes of the second microwave device's ports that need microwave link search is set as a link search format after the current information of the overhead bytes of the second microwave device's said ports is backed up;
providing (207), by the first microwave device, the link information of the second microwave device carried in the microwave frame to the network management device, such that the network management device analyzes and processes the link information to obtain link connection data; and
recovering (206), by the first microwave device, the information of the overhead bytes of said ports of the first microwave device to the backup information of the overhead bytes of the ports of the first microwave device after the link information of the second microwave device is provided to the network management device.

2. The method according to any one of claims 1, wherein the microwave frame is a synchronous digital hierarchy, SDH, microwave frame, and the overhead byte is a J0 byte or an x reserved byte; or the microwave frame is a plesiochronous digital hierarchy, PDH, microwave frame, and the overhead byte is any overhead byte.

3. A microwave link searching method, **characterized by**, comprising:
backing up (302), by a network management device, information of the overhead bytes of all the ports of the microwave devices that need microwave link search, wherein the microwave devices are the network elements of a microwave network;
setting (303), by the network management device, a current format of overhead bytes of all the ports of said microwave devices as a link search format after the information of the overhead bytes of all the ports of said microwave devices is backed up;
sending (304), by a first microwave device which is one of said microwave devices, a microwave frame to a second microwave device which is one of said microwave devices and is connected to the first microwave device, wherein the microwave frame sent by the first microwave device carries the overhead bytes whose format is set as a link search format and which carry the link information of the first microwave device;
receiving (305), by the first microwave device, a microwave frame sent by the second microwave device, wherein the microwave frame sent by the second microwave device carries link information of the second microwave device and is sent after the format of overhead bytes of the second microwave device's ports that need microwave link search is set as a link search format after the information of the overhead bytes of the second microwave device's said ports is backed up;
providing, by the first microwave device, the link information of the second microwave device to the network management device, such that the network management device analyzes and processes the link information to obtain link connection data; and
recovering (307), by the network management device, the information of the overhead bytes of all the ports of the microwave devices that need microwave link search to their corresponding backed up information after the microwave devices provide the link information carried in a microwave frame sent by other microwave device connected to themselves to the network management device.

4. The method according to claim 3, wherein the microwave frame is a synchronous digital hierarchy, SDH, microwave frame, and the overhead byte is a J0 byte or an x reserved byte; or the microwave frame is a plesiochronous digital hierarchy, PDH, microwave frame, and the overhead byte is any overhead byte.

5. A microwave device, **characterized by**, comprising a notifying unit, a sending unit, a receiving unit and a providing unit, wherein
the notifying unit, adapted to receive a search start command delivered by a network management device and notify the sending unit to perform its own functions according to the search start command;
the sending unit , adapted to set an overhead byte conforming to a link search format after receiving a notification message from the notifying unit, and send a microwave frame in which the overhead byte is carried, wherein the microwave frame carries link information of the microwave device, and is sent after the format of overhead bytes of the microwave device's ports that need microwave link search is set as a link search format after information of the overhead bytes of the microwave device's said ports is backed up;
the receiving unit, adapted to receive a microwave frame sent by a second microwave device that needs microwave link search and is connected to the microwave device, wherein the microwave frame carries link information of the second microwave device, and the microwave frame is sent after the format of overhead bytes of the second microwave device's ports that need microwave link search is set as a link search format after information of the overhead bytes of said ports of the second microwave device is backed up;
the providing unit, adapted to provide the link information of the second microwave device carried in the microwave frame to the network management device; and
the microwave device recovers the information of the overhead bytes of said ports of the microwave device to the backup information of the overhead bytes of the ports of the microwave device after the link information of the second microwave device is provided to the network management device, wherein both the microwave device and the second microwave device are network elements of a microwave network.

6. A network management device, **characterized by**, comprising:
a setting unit, adapted to set an overhead byte for a microwave device that needs microwave link search, wherein the overhead byte carries link information of the microwave device that needs microwave link search;
an obtaining unit, adapted to query the microwave device that needs microwave link search, and obtain link information of a microwave device carried in a received microwave frame, wherein the microwave device needs microwave link search and is connected to the microwave device that needs microwave link search; and
the network management device backs up the information of the overhead bytes of the microwave device before the setting unit sets the overhead byte for the microwave device, and delivers a command of recovering the information of the overhead bytes of the microwave device to the backup information of the overhead bytes after the obtaining unit obtains the link information of the microwave device, wherein the microwave device is a network element of a microwave network.

7. The device according to claim 6, further comprising:
a processing unit, adapted to analyze and process the link information of the microwave device obtained by the obtaining unit, and display the link information to a user.

8. A computer readable storage medium, comprising computer program codes, wherein the computer program codes are executed by a computer processor, such that the computer processor is triggered to perform all the steps of the microwave link searching method according to any one of claims 1 to 4.

## Patentansprüche

1. Richtfunkstrecken-Suchverfahren, **dadurch gekennzeichnet, dass** es Folgendes umfasst:
Sichern (203), durch eine erste Richtfunkeinrichtung, die eine Richtfunkstreckensuche benötigt, der Informationen der Zusatzbytes der Ports der ersten Richtfunkeinrichtung, die eine Richtfunkstreckensuche benötigen, nach dem Empfangen eines durch eine Netzwerkverwaltungseinrichtung gelieferten Suchstartbefehls;
Einstellen (203), durch die erste Richtfunkeinrichtung, eines Formats von Zusatzbytes der Ports der ersten Richtfunkeinrichtung, die eine Richtfunkstreckensuche als ein Streckensuchformat nach dem Sichern der Informationen der Zusatzbytes der Ports der ersten Richtfunkeinrichtung benötigen, und Senden eines Richtfunkrahmens an eine zweite Richtfunkeinrichtung, wobei der Richtfunkrahmen die Zusatzbytes führt, die die Streckeninformationen der ersten Richtfunkeinrichtung führen, und die erste Richtfunkeinrichtung und die zweite Richtfunkeinrichtung sind Netzwerkelemente eines Mikrowellennetzwerks;
Empfangen (205), durch die erste Richtfunkeinrichtung, eines durch die zweite Richtfunkeinrichtung gesendeten Richtfunkrahmens, wobei der durch die zweite Richtfunkeinrichtung gesendete Richtfunkrahmen Streckeninformationen der zweiten Richtfunkeinrichtung führt und nach dem Einstellen des Formats der Zusatzbytes der Ports der zweiten Richtfunkeinrichtung, die eine Richtfunkstreckensuche benötigen, als ein Streckensuchformat gesendet wird, nachdem die aktuellen Informationen der Zusatzbytes der Ports der zweiten Richtfunkeinrichtung gesichert sind;
Bereitstellen (207), durch die erste Richtfunkeinrichtung, der in dem Richtfunkrahmen geführten Streckeninformationen der zweiten Richtfunkeinrichtung zu der Netzwerkverwaltungseinrichtung, so dass die Netzwerkverwaltungseinrichtung die Streckeninformationen analysiert und verarbeitet, um Streckenverbindungsdaten zu erhalten; und
Wiederherstellen (206), durch die erste Richtfunkeinrichtung, der Informationen der Zusatzbytes der Ports der ersten Richtfunkeinrichtung zu den Sicherungsinformationen der Zusatzbytes der Ports der ersten Richtfunkeinrichtung nach dem Bereitstellen der Streckeninformationen der zweiten Richtfunkeinrichtung an die Netzwerkverwaltungseinrichtung.

2. Verfahren nach Anspruch 1, wobei der Richtfunkrahmen ein "Synchronous Digital Hierarchy"-SDH-Richtfunkrahmen ist und das Zusatzbyte ein J0-Byte oder ein x-reserviertes Byte ist; oder der Richtfunkrahmen ein "Plesiochronous Digital Hierarchy"-PDH-Richtfunkrahmen ist und das Zusatzbyte ein beliebiges Zusatzbyte ist.

3. Richtfunkstreckensuchverfahren, dadurch charakterisiert, dass es Folgendes umfasst; Sichern (302), durch eine Netzwerkverwaltungseinrichtung, von Informationen der Zusatzbytes aller Ports der Richtfunkeinrichtungen, die eine Richtfunkstreckensuche benötigen, wobei die Richtfunkeinrichtungen die Netzwerkelemente eines Mikrowellennetzwerks sind;
Einstellen (303), durch die Netzwerkverwaltungseinrichtung, eines aktuellen Formats von Zusatzbytes aller Ports der Richtfunkeinrichtungen als ein Streckensuchformat nach dem Sichern der Informationen der Zusatzbytes aller Ports der Richtfunkeinrichtungen;
Senden (304), durch eine erste Richtfunkeinrichtung, die eine der Richtfunkeinrichtungen ist, eines Richtfunkrahmens an eine zweite Richtfunkeinrichtung, die eine der Richtfunkeinrichtungen ist und mit der ersten Richtfunkeinrichtung verbunden ist, wobei der durch die erste Richtfunkeinrichtung gesendete Richtfunkrahmen die Zusatzbytes führt, deren Format als ein Streckensuchformat eingestellt ist und die die Streckeninformationen der ersten Richtfunkeinrichtung führen;
Empfangen (305), durch die erste Richtfunkeinrichtung, eines durch die zweite Richtfunkeinrichtung gesendeten Richtfunkrahmens, wobei der durch die zweite Richtfunkeinrichtung gesendete Richtfunkrahmen Streckeninformationen der zweiten Richtfunkeinrichtung führt und nach dem Einstellen des Formats der Zusatzbytes der Ports der zweiten Richtfunkeinrichtung, die eine Richtfunkstreckensuche benötigen, als ein Streckensuchformat gesendet wird, nachdem die Informationen der Zusatzbytes der Ports der zweiten Richtfunkeinrichtung gesichert sind;
Bereitstellen, durch die erste Richtfunkeinrichtung, der Streckeninformationen der zweiten Richtfunkeinrichtung zu der Netzwerkverwaltungseinrichtung, so dass die Netzwerkverwaltungseinrichtung die Streckeninformationen analysiert und verarbeitet, um Streckenverbindungsdaten zu erhalten; und
Wiederherstellen (307), durch die Netzwerkverwaltungseinrichtung, der Informationen der Zusatzbytes aller Ports der Richtfunkeinrichtungen, die eine Richtfunkstreckensuche benötigen, zu ihren entsprechenden Sicherungsinformationen, nachdem die Richtfunkeinrichtungen die in einem durch eine andere mit sich selbst verbundene Richtfunkeinrichtung gesendeten Richtfunkrahmen geführten Streckeninformationen an die Netzwerkverwaltungseinrichtung liefert.

4. Verfahren nach Anspruch 3, wobei der Richtfunkrahmen ein "Synchronous Digital Hierarchy"-SDH-Richtfunkrahmen ist und das Zusatzbyte ein J0-Byte oder ein x-reserviertes Byte ist; oder der Richtfunkrahmen ein "Plesiochronous Digital Hierarchy"-PDH-Richtfunkrahmen ist und das Zusatzbyte ein beliebiges Zusatzbyte ist.

5. Richtfunkeinrichtung, **dadurch gekennzeichnet, dass** sie eine Benachrichtigungseinheit, eine Sendeeinheit, eine Empfangseinheit und eine Bereitstellungseinheit umfasst, wobei
die Benachrichtigungseinheit ausgelegt ist zum Empfangen eines durch eine Netzwerkverwaltungseinrichtung gelieferten Suchstartbefehls und Benachrichtigen der Sendeeinheit zum Durchführen ihrer eigenen Funktionen gemäß dem Suchstartbefehl;
die Sendeeinheit, ausgelegt zum Einstellen eines einem Streckensuchformat entsprechenden Zusatzbyte nach dem Empfangen einer Benachrichtigungsnachricht von der Benachrichtigungseinheit und Senden eines Richtfunkrahmens, in dem das Zusatzbyte geführt wird, wobei der Richtfunkrahmen Streckeninformationen der Richtfunkeinrichtung führt und nach dem Einstellen des Formats der Zusatzbytes der Ports der Richtfunkeinrichtung, die eine Richtfunkstreckensuche benötigen, als ein Streckensuchformat gesendet wird, nachdem die Informationen der Zusatzbytes der Ports der Richtfunkeinrichtung gesichert sind;
die Empfangseinheit, ausgelegt zum Empfangen eines durch eine zweite Richtfunkeinrichtung gesendeten Richtfunkrahmens, die eine Richtfunkstreckensuche benötigt und mit der Richtfunkeinrichtung verbunden ist, wobei der Richtfunkrahmen Streckeninformationen der zweiten Richtfunkeinrichtung führt und der Richtfunkrahmen nach dem Einstellen des Formats der Zusatzbytes der Ports der zweiten Richtfunkeinrichtung, die eine Richtfunkstreckensuche benötigen, als ein Streckensuchformat gesendet wird, nachdem die Informationen der Zusatzbytes der Ports der zweiten Richtfunkeinrichtung gesichert sind;
die Bereitstellungseinheit, ausgelegt zum Bereitstellen der in dem Richtfunkrahmen geführten Streckeninformationen der zweiten Richtfunkeinrichtung an die Netzwerkverwaltungseinrichtung; und
die Richtfunkeinrichtung die Informationen der Zusatzbytes der Ports der Richtfunkeinrichtung zu den Sicherungsinformationen der Zusatzbytes der Ports der Richtfunkeinrichtung wiederherstellt, nachdem die Streckeninformationen der zweiten Richtfunkeinrichtung an die Netzwerkverwaltungseinrichtung bereitgestellt sind, wobei sowohl die Richtfunkeinrichtung als auch die zweite Richtfunkeinrichtung Netzwerkelemente eines Richtfunknetzwerks sind.

6. Netzwerkverwaltungseinrichtung, **dadurch gekennzeichnet, dass** sie Folgendes umfasst:
eine Einstelleinheit, ausgelegt zum Einstellen eines Zusatzbyte für eine Richtfunkeinrichtung, die Richtfunkstreckensuche benötigt, wobei das Zusatzbyte Streckeninformationen der Richtfunkeinrichtung führt, die eine Richtfunkstreckensuche benötigt;
eine Erhalteeinheit, ausgelegt zum Abfragen der Richtfunkeinrichtung, die eine Richtfunkstreckensuche benötigt, und Erhalten von in einem empfangenen Richtfunkrahmen geführten Streckeninformationen einer Richtfunkeinrichtung, wobei die Richtfunkeinrichtung Richtfunkstreckensuche benötigt und mit der Richtfunkeinrichtung verbunden ist, die Richtfunkstreckensuche benötigt; und
die Netzwerkverwaltungseinrichtung sichert die Informationen der Zusatzbytes der Richtfunkeinrichtung, bevor die Einstelleinheit das Zusatzbyte für die Richtfunkeinrichtung einstellt, und liefert einen Befehl des Wiederherstellens der Informationen der Zusatzbytes der Richtfunkeinrichtung zu den Sicherungsinformationen der Zusatzbytes, nachdem die Erhalteeinheit die Streckeninformationen der Richtfunkeinrichtung erhält, wobei die Richtfunkeinrichtung ein Netzwerkelement eines Richtfunknetzwerks ist.

7. Einrichtung nach Anspruch 6, die weiterhin Folgendes umfasst:
eine Verarbeitungseinheit, ausgelegt zum Analysieren und Verarbeiten der durch die Erhalteeinheit erhaltenen Streckeninformationen der Richtfunkeinrichtung und Anzeigen der Streckeninformationen für einen Benutzer.

8. Computerlesbares Speichermedium umfassend Computerprogrammcodes, wobei die Computerprogrammcodes durch einen Computerprozessor ausgeführt werden, so dass der Computerprozessor ausgelöst wird zum Durchführen aller der Schritte des Richtfunkstreckensuchverfahrens nach einem der Ansprüche 1 bis 4.

## Revendications

1. Procédé de recherche de faisceaux hertziens, **caractérisé en ce qu'**il comprend :
la sauvegarde (203) par un premier dispositif hertzien qui nécessite une recherche de faisceaux hertziens, des informations des octets de surdébit des ports du premier dispositif hertzien, lesquels nécessitent une recherche de faisceaux hertziens, après la réception d'une commande de lancement de recherche délivrée par un dispositif de gestion de réseau ;
l'établissement (203), par le premier dispositif hertzien, d'un format des octets de surdébit desdits ports du premier dispositif hertzien qui nécessitent une recherche de faisceaux hertziens comme un format de recherche de faisceaux après la sauvegarde des informations des octets de surdébit desdits ports du premier dispositif hertzien, et l'envoi d'une trame hertzienne à un second dispositif hertzien, la trame hertzienne incluant les octets de surdébit qui incluent les informations de faisceau du premier dispositif hertzien, et le premier dispositif hertzien et le second dispositif hertzien étant des éléments de réseau d'un réseau hertzien ;
la réception (205), par le premier dispositif hertzien, d'une trame hertzienne envoyée par le second dispositif hertzien, la trame hertzienne envoyée par le second dispositif hertzien incluant des informations de faisceau du second dispositif hertzien, et étant envoyée après l'établissement du format des octets de surdébit des ports du second dispositif hertzien qui nécessitent la recherche de faisceaux hertziens comme format de recherche de faisceaux après la sauvegarde des informations courantes des octets de surdébit desdits ports du second dispositif hertzien ;
la fourniture (207), par le premier dispositif hertzien, des informations de faisceau du second dispositif hertzien incluses dans la trame hertzienne au dispositif de gestion de réseau, de telle sorte que le dispositif de gestion de réseau analyse et traite les informations de faisceau pour obtenir des données de connexion de faisceaux ; et
le rétablissement (206), par le premier dispositif hertzien, des informations des octets de surdébit desdits ports du premier dispositif hertzien sur les informations de sauvegarde des octets de surdébit des ports du premier dispositif hertzien après la fourniture des informations de faisceau du second dispositif hertzien au dispositif de gestion de réseau.

2. Procédé selon la revendication 1, dans lequel la trame hertzienne est une trame hertzienne de hiérarchie numérique synchrone, SDH, et l'octet de surdébit est un octet J0 ou un octet à x réservé ; ou la trame hertzienne est une trame hertzienne à hiérarchie numérique plésiochrone, PDH, et l'octet de surdébit est n'importe quel octet de surdébit.

3. Procédé de recherche de faisceaux hertziens, **caractérisé en ce qu'**il comprend :
la sauvegarde (302), par un dispositif de gestion de réseau, d'informations des octets de surdébit de tous les ports des dispositifs hertziens qui nécessitent une recherche de faisceaux hertziens, les dispositifs hertziens étant les éléments de réseau d'un réseau hertzien ;
l'établissement (303), par le dispositif de gestion de réseau, d'un format courant des octets de surdébit de tous les ports desdits dispositifs hertziens comme un format de recherche de faisceaux après la sauvegarde des informations des octets de surdébit de tous les ports desdits dispositifs hertziens,
l'envoi (304), par un premier dispositif hertzien qui est l'un desdits dispositifs hertziens, d'une trame hertzienne à un second dispositif hertzien, lequel est l'un desdits dispositifs hertziens et est connecté au premier dispositif hertzien, la trame hertzienne envoyée par le premier dispositif hertzien incluant les octets de surdébit dont le format est établi comme format de recherche de faisceaux et qui incluent les informations de faisceau du premier dispositif hertzien ;
la réception (305), par le premier dispositif hertzien, d'une trame hertzienne envoyée par le second dispositif hertzien, la trame hertzienne envoyée par le second dispositif hertzien incluant des informations de faisceau du second dispositif hertzien et étant envoyée après l'établissement du format des octets de surdébit des ports du second dispositif hertzien qui nécessitent la recherche de faisceaux hertziens comme format de recherche de faisceaux après la sauvegarde des informations des octets de surdébit desdits ports du second dispositif hertzien ;
la fourniture, par le premier dispositif hertzien, des informations de faisceau du second dispositif hertzien au dispositif de gestion de réseau, de telle sorte que le dispositif de gestion de réseau analyse et traite les informations de faisceau pour obtenir des données de connexion de faisceau ; et
le rétablissement (307), par le dispositif de gestion de réseau, des informations des octets de surdébit de tous les ports desdits dispositifs hertziens qui nécessitent une recherche de faisceaux hertziens sur leurs informations sauvegardées correspondantes après la fourniture au dispositif de gestion de réseau par les dispositifs hertziens des informations de faisceau incluses dans une trame hertzienne envoyée par un autre dispositif hertzien qui leur est connecté.

4. Procédé selon la revendication 3, dans lequel la trame hertzienne est une trame hertzienne de hiérarchie numérique synchrone, SDH, et l'octet de surdébit est un octet J0 ou un octet à x réservé ; ou la trame hertzienne est une trame hertzienne à hiérarchie numérique plésiochrone, PDH, et l'octet de surdébit est n'importe quel octet de surdébit.

5. Dispositif hertzien, **caractérisé en ce qu'**il comprend une unité de notification, une unité d'envoi, une unité de réception et une unité de fourniture, dans lequel
l'unité de notification est adaptée pour recevoir une commande de lancement de recherche délivrée par un dispositif de gestion de réseau et notifier à l'unité d'envoi d'exécuter ses propres fonctions en fonction de la commande de lancement de recherche ;
l'unité d'envoi est adaptée pour établir un octet de surdébit conforme à un format de recherche de faisceaux après la réception d'un message de notification depuis l'unité de notification, et envoyer une trame hertzienne dans laquelle l'octet de surdébit est inclus, la trame hertzienne incluant des informations de faisceau du dispositif hertzien, et étant envoyée après l'établissement du format des octets de surdébit des ports du dispositif hertzien qui nécessitent la recherche de faisceaux hertziens comme format de recherche de faisceaux après la sauvegarde des informations des octets de surdébit desdits ports du dispositif hertzien ;
l'unité de réception est adaptée pour recevoir une trame hertzienne envoyée par un second dispositif hertzien qui nécessite une recherche de faisceaux hertziens et qui est connecté au dispositif hertzien, la trame hertzienne incluant des informations de faisceau du second dispositif hertzien, et la trame hertzienne étant envoyée après l'établissement du format des octets de surdébit des ports du second dispositif hertzien qui nécessitent la recherche de faisceaux hertziens comme format de recherche de faisceaux après la sauvegarde des informations des octets de surdébit desdits ports du second dispositif hertzien ;
l'unité de fourniture est adaptée pour fournir les informations de faisceau du second dispositif hertzien incluses dans la trame hertzienne au dispositif de gestion de réseau ; et
le dispositif hertzien rétablit les informations des octets de surdébit desdits ports du dispositif hertzien sur les informations de sauvegarde des octets de surdébit des ports du dispositif hertzien après la fourniture des informations de faisceau du second dispositif hertzien au dispositif de gestion de réseau, le dispositif hertzien et le second dispositif hertzien étant des éléments de réseau d'un réseau hertzien.

6. Dispositif de gestion de réseau, **caractérisé en ce qu'**il comprend :
une unité d'établissement, adaptée pour établir un octet de surdébit pour un dispositif hertzien qui nécessite une recherche de faisceaux hertziens, l'octet de surdébit incluant des informations de faisceau du dispositif hertzien qui nécessite une recherche de faisceaux hertziens ;
une unité d'obtention, adaptée pour interroger le dispositif hertzien qui nécessite une recherche de faisceaux hertziens, et obtenir des informations de faisceau d'un dispositif hertzien incluses dans une trame hertzienne reçue, le dispositif hertzien nécessitant une recherche de faisceaux hertziens et étant connecté au dispositif hertzien qui nécessite une recherche de faisceaux hertziens ; et
le dispositif de gestion de réseau sauvegarde les informations des octets de surdébit du dispositif hertzien avant que l'unité d'établissement n'établisse l'octet de surdébit pour le dispositif hertzien, et délivre une commande de rétablissement des informations des octets de surdébit du dispositif hertzien sur les informations de sauvegarde des octets de surdébit après l'obtention par l'unité d'obtention des informations de faisceau du dispositif hertzien, le dispositif hertzien étant un élément de réseau d'un réseau hertzien.

7. Dispositif selon la revendication 6, comprenant en outre :
une unité de traitement, adaptée pour analyser et traiter les informations de faisceau du dispositif hertzien obtenues par l'unité d'obtention, et afficher les informations de faisceau à un utilisateur.

8. Support de stockage lisible par ordinateur, comprenant des codes de programme informatique, les codes de programme informatique étant exécutés par un processeur informatique, de telle sorte que le processeur informatique soit déclenché pour exécuter toutes les étapes du procédé de recherche de faisceaux hertziens selon l'une quelconque des revendications 1 à 4.
